# EUROPÄISCHE PATENTSCHRIFT

(11) **EP 0 771 316 B1**
(45) Veröffentlichungstag und Bekanntmachung des Hinweises auf die Patenterteilung: **21.10.1998**
(21) Anmeldenummer: 95924962.4
(22) Anmeldetag: 03.07.1995
(51) Int. Cl.: C04B 35/58, C04B 35/56, C04B 35/626

(54) **VERFAHREN ZUR HERSTELLUNG VON SINTERFÄHIGEN GRÜNKÖRPERN UNTER VERWENDUNG VON NANOSKALIGEN NICHTOXIDISCHEN PULVERN**
PROCESS FOR PRODUCING SINTERABLE GREEN BODIES USING NANOSCALAR NON-OXIDIC POWDERS
PROCEDE DE PRODUCTION DE CORPS VERTS FRITTABLES A L'AIDE DE POUDRES NON OBTENUES PAR VOIE D'OXYDATION A GRANULOMETRIE NANOMETRIQUE

(30) Priorität: 15.07.1994 DE 4425005
(43) Veröffentlichungstag der Anmeldung: 07.05.1997
(73) Patentinhaber: Fraunhofer-Gesellschaft zur Förderung der angewandten Forschung e.V., 80636 München (DE); H.C. Starck GmbH & Co. KG, 38642 Goslar (DE); CERAMETAL S.a.r.l., 8201 Mamer (LU)
(72) Erfinder: BODEN, Gottfried, D-01257 Dresden (DE); LENK, Reinhard, D-01640 Coswig (DE); RICHTER, Volkmar, D-01157 Dresden (DE); VON RUTHENDORF-PRZEWOSKI, Monika, D-01465 Langebrück (DE)
(74) Vertreter: Steiling, Lothar, Dr.
(86) Internationale Anmeldenummer: EP9502564
(87) Internationale Veröffentlichungsnummer: WO9602480

(56) Entgegenhaltungen:
- WO-A-93/21127

## Beschreibung

Die Erfindung bezieht sich auf die Gebiete der Keramik und der pulvermetallurgischen Verbundwerkstoffe und betrifft ein Verfahren zur Herstellung von sinterfähigen Grünkörpern unter Verwendung von nanoskaligen nichtoxidischen Pulvern, die nach der Sinterung z.B. als Keramikbauteile oder Hartstoffverbunde eingesetzt werden können.

In letzter Zeit werden große Anstrengungen unternommen, um nanoskalige Pulver herzustellen.

Derartige nanoskalige Pulver weisen Primärteilchen mit einer oberen Korngröße bis 500 nm, bevorzugt bis 100 nm, auf und zeichnen sich durch ein ausgesprochen großes Verhältnis von Oberfläche zum Volumen aus.

Aus diesem Grunde weisen diese Primärteilchen sehr starke Oberflächenkräfte auf, die in einer ausgeprägten Adsorptionswirkung gegenüber gasförmigen und flüssigen Molekülen sowie in einer starken gegenseitigen Wechselwirkung zum Ausdruck kommen.

die Adsorptionswirkung gegenüber Gasen und Flüssigkeiten führt nicht nur zu einer reversiblen physikalischen Adsorption bestimmter Gase oder Flüssigkeiten, wie Sauerstoff, Ammoniak, Chlorwasserstoff oder Kohlenwasserstoffen, sondern darüberhinaus über den Schritt der Chemisorption auch zu einer chemischen Veränderung der Oberfläche, wie der Oxidation (z.B. Oxid-, Oxinitrid- und Oxicarbidbildung), der Ammonolyse und dem Chlorideinbau.

Für nanoskalige nichtoxidische keramische und Hartstoffpulver ist dabei der strukturelle Sauerstoffeinbau besonders schädigend und substanzverändernd. Dieser kann leicht über 10 Masse-% betragen und dadurch zu einer völligen Konvertierung der nichtoxidischen in quasi-oxidische Pulver führen.

Ein weiteres Problem beim Einsatz nanoskaliger Pulver entsteht durch die gegenseitige Wechselwirkung der Pulverteilchen, die vor allem durch elektrostatische und van der Waals-Kräfte bedingt ist. Diese Wechselwirkung führt zu einer Agglomerierung der nanoskaligen Pulver und damit zu einem Pulverhaufwerk, das vor einer weiteren Verarbeitung durch Zugabe von oberflächenaktiven organischen Substanzen bei möglichst gleichzeitiger mechanischer Einwirkung wieder zerstört werden muß.

In der PCT-Anmeldung WO 93/21127 wird vorgeschlagen, oberflächenmodifizierte nanoskalige keramische Pulver herzustellen, indem das unmodifizierte Pulver in Anwesenheit von mindestens einer niedrigmolekularen organischen Verbindung, die über mindestens eine funktionelle Gruppe verfügt, dispergiert und anschließend das Dispergiermittel wieder entfernt wird.

Dabei reagieren oder wechselwirken die funktionellen Gruppen der niedrigmolekularen organischen Verbindung mit der Oberfläche der Pulverteilchen. Ein besonderer Vorteil besteht darin, wenn zwischen den funktionellen Gruppen der oberflächenmodifizierenden Verbindung und den Oberflächengruppen der keramischen Partikel eine Säure/Base-Reaktion stattfinden kann.

Als Dispergiermittel werden Wasser für oxidische Pulver und/oder organische Lösungsmittel verwendet.

Als niedrigmolekulare organische Verbindungen werden bevorzugt solche eingesetzt, die ein Molekulargewicht von nicht mehr als 500 und insbesondere nicht mehr als 350 aufweisen. Derartige Verbindungen sind beispielsweise Carbonsäure, Amine, β-Dicarbonylverbindungen, Alkoholate oder Organoalkoxysilane.

Derartig modifizierte keramische Pulver können dann zur Herstellung von Extrusionsmassen verwendet werden. Dazu müssen aber Additiva zugegeben werden, um eine anschließende Formgebung zu ermöglichen.

Der Nachteil dieser Erfindung besteht darin, daß die Modifizierung für nichtoxidische Pulver im Hinblick auf die Bildung eines sinterfähigen Grünkörpers unzureichend ist.

Die Aufgabe der Erfindung ist, ein Verfahren zur Herstellung von sinterfähigen Grünkörpern unter Verwendung von nanoskaligen nichtoxidischen Pulvern anzugeben, bei dem die Oberflächen der Pulverteilchen vor Gasen und Flüssigkeiten geschützt werden.

Die Aufgabe wird durch das in den Ansprüchen angegebene Verfahren gelöst.

Bei dem erfindungsgemäßen Verfahren werden zur Herstellung von sinterfähigen Grünkörpern unter Verwendung von nanoskaligen nichtoxidischen Pulvern erfindungsgemäß nanoskalige nichtoxidische Pulver mit einer oberen Korngröße bis 500 nm oder nanoskalige nichtoxidische Pulver mit einer oberen Korngröße bis 500 nm und nichtoxidische Pulver mit einer mittleren Korngröße größer 500 nm in einem organischen Lösungsmittel mit mindestens einem höhermolekularen Dispergierhilfsmittel, bestehend aus einer oder mehreren polaren Gruppen und einem oder mehreren langkettigen aliphatischen Resten, dispergiert, und diese Dispersion wird anschließend zu einem sinterfähigen Grünkörper verarbeitet, wobei als höhermolekulares Dispergierhilfsmittel ein Imid einer gesättigten oder ungesättigten Dicarbonsäure mit einem oder mehreren Alkylresten oder Alkenylresten einer Kettenlänge von mehr als 35 C-Atomen eingesetzt wird.

Vorteilhafterweise werden nanoskalige nichtoxidische Pulver mit einer oberen Korngröße bis 100 nm eingesetzt.

Auch vorteilhafterweise wird als höhermolekulares Dispergierhilfsmittel ein alkyl- oder alkenylsubsitutiertes Imid der Bernsteinsäure eingesetzt.

Weiterhin vorteilhafterweise werden die höhermolekularen Dispergierhilfsmittel in einer Menge von 0,5 bis 20 Ma-%, bezogen auf den Feststoffgehalt, eingesetzt werden.

Und weiterhin vorteilhaft ist es, daß die höhermolekularen Dispergierhilfsmittel in einer Menge von 1 bis 8 Ma-%, bezogen auf den Feststoffgehalt, eingesetzt werden.

Es ist ebenfalls von Vorteil, daß die nanoskaligen nichtoxidischen Pulver mit einer oberen Korngröße bis 500 nm in einem Masseanteil von 2 bis 95 %, bezogen auf die Gesamtpulvermasse, eingesetzt werden.

Und auch vorteilhaft ist es, daß die nanoskaligen nichtoxidischen Pulver mit einer oberen Korngröße bis 500 nm in einem Masseanteil von 20 bis 50 %, bezogen auf die Gesamtpulvermasse, eingesetzt werden.

Bei dem erfindungsgemäßen Verfahren werden sinterfähige Grünkörper unter Verwendung von nanoskaligen nichtoxidischen Pulvern hergestellt. Die nanoskaligen nichtoxidischen Pulver können dabei allein oder im Gemisch mit herkömmlichen nichtoxidischen Pulvern mit einer mittleren Korngröße größer 500 nm verwendet werden, wobei die chemische Zusammensetzung beider Pulvergruppen gleich oder verschieden voneinander sein kann. Beispielsweise könnten derartige Pulvergruppen zum Einsatz kommen:
nano-TiN/TiN, nano-TiN/TiC, nano-TiN/WC, nano-TiC/TiC, nano-TiC/TiN, nano-TiC/WC, nano-Si₃N₄/Si₃N₄, nano-Si₃N₄/SiC, nano-SiC/SiC, nano-SiC/Si₃N₄, nano-WC/WC, nano-WC/TiC und andere Hartstoffverbindungen mit den Elementen der IV. bis VI. Nebengruppe und der III. bis V. Hauptgruppe des PSE.

Die nanoskaligen und herkömmlichen nichtoxidischen Pulver werden in ein organisches Lösungsmittel eingetragen. Dieses Lösungsmittel enthält ein höhermolekulares Dispergierhilfsmittel.

Als organische Lösungsmittel dienen bevorzugt aliphatische oder aromatische Kohlenwasserstoffe, wie Hexan, Heptan, Octan, Benzen oder Toluen, Alkohole, wie Ethanol oder Propanol oder Aceton.

Als höhermolekulares Dispergierhilfsmittel wird ein Stoff mit einer oder mehreren polaren Gruppen und einer oder mehreren langkettigen aliphatischen Resten verwendet. Bei einem derartigen Dispergierhilfsmittel führt das Hinzufügen einer weiteren CH₂-Gruppe in die Kohlenwasserstoffkette zu keiner nachweisbaren Veränderung der physikalischen Eigenschaften, und eine stoffliche Trennung von diesen so hergestellten Substanzen ist praktisch nicht möglich.

Die vorteilhafte Wirkung des erfindungsgemäßen Verfahrens besteht darin, daß durch die Kombination der Ladungs- und sterischen Verhältnisse der höhermolekularen Dispergierhilfsmittel eine weitgehend vollständige Belegung der Oberfläche der Pulvertielchen erfolgt, wobei die Moleküle relativ fest haften und darüberhinaus die umhüllten Pulverteilchen sterisch voneinander auf Abstand gehalten werden.

Dadurch wird die Agglomeration der Teilchen verhindert und eine hohe Stabilität der Dispersion gewährleistet.

Dies kann durch die Verwendung niedermolekularer organischer Verbindungen nicht erreicht werden.

Ein besonderer Vorteil des erfindungsgemäßen Verfahrens besteht darin, daß die eingesetzten höhermolekularen Dispergierhilfsmittel gleichzeitig als Formgebungshilfsmittel wirken können und dadurch z.B. die Zugabe von Preßhilfsmitteln, wie Paraffin, oder Granulierfhilfsmitteln, wie Polyethylenglykol oder Polyvinylalkohol, zur Herstellung eines sinterfähigen Grünkörpers nicht mehr notwendig ist.

Dadurch wird gleichzeitig der Anteil an organischen Hilfsmitteln im Sinterkörper vermindert, was sich positiv auf das Verdichtungsverhalten beim Sintern auswirkt.

Die Dispergierung erfolgt mit den bekannten Mitteln, indem das Pulver mit dem höhermolekularen Dispergierhilfsmittel in dem organischen Lösungsmittel gemeinsam z.B. unter Rühren oder in einem Ultraschallbad oder durch Attritieren gut durchgemischt werden. Nach diesem Vorgang weist die Suspension eine Stabilität von bis zu mehreren Stunden auf und kann somit problemlos verarbeitet, z.B. granuliert werden. Die Granulierung erfolgt z.B. durch Versprühen der Suspension in einem Sprühtrockner oder durch Vakuumverdampfung des Lösungsmittels und anschließende Siebgranulierung. Die erhaltenen Granulate sind infolge des erfindungsgemäßen Verfahrens mit dem höhermolekularen Dispergierhilfsmittel umhüllt und somit unempfindlich gegenüber einer Oxidation durch Luftsauerstoff. Sie können in der üblichen Weise z.B. uniaxial oder isostatisch zu sinterfähigen Grünkörpern verpreßt werden.

Im folgenden wird die Erfindung an drei Ausführungsbeispielen erläutert.

### Beispiel 1

Eine stabile Suspension aus 20 Ma-% nano-TiN einer Primärteilchengröße von 40 nm und 80 Ma-% TiN mit einer mittleren Korngröße von 1500 nm wird hergestellt, indem die TiN-Pulver unter Rühren in n-Hexan eingetragen werden, in dem sich 1 Ma-% Alkylsuccinimid (Alkylrest aus 60 bis 80 C-Atomen bestehend) befindet. Der Feststoffanteil der Dispersion beträgt 41 %, der Anteil an Dispergierhilfsmittel bezogen auf den Feststoffanteil beträgt 3,5 %. Die Dispersion wird zweimal 30 Minuten im Ultraschallbad behandelt und anschließend in einem Vakuumtrockenschrank eingedampft. Das Rückstandsgemisch wird durch ein 100 µm-Sieb granuliert und das Granulat bei einem Preßdruck von 300 MPa zu Biegebruchstäben verpreßt. Diese sind stabil gegenüber äußeren Einflüssen und zeigen eine Gründichte von 52 % der theoretischen Dichte. Sie lassen sich nach rückstandsfreiem Ausdampfen des höhermolekularen Dispergierhilfsmittels zu dichten Körpern sintern.

### Beispiel 2

Aus 20 Vol-% nano-TiC einer Primärteilchengröße von 40 nm und 80 Vol-% WC-Pulver mit einer mittleren Korngröße von 600 nm wird in n-Hexan durch Zugabe von 4 Ma-% Alkylsuccinimid einer Molmasse von 850 g/Mol unter Rühren eine stabile Dispersion hergestellt. Der Feststoffanteil in der Dispersion beträgt 40 %. Die ständig durch Rühren bewegte Dispersion wird anschließend in einem Nitro-Sprühtrockner zu einem Granulat versprüht, welches dann einen mittleren Durchmesser von 40 µm aufweist. Dieses Granulat wird anschließend bei einem Preßdruck von 250 MPa uniaxial zu Biegebruchstäben verpreßt, die eine Gründichte von 53 % der theoretischen Dichte aufweisen und die bei 1600°C zu dichten Körpern gesintert werden können.

### Beispiel 3

Aus einem Siliciumcarbonitridpulver, das aus Teilchen zwischen 50 und 500 nm besteht, und 8 Massenanteilen Yttriumoxid als Sinteradditiv wird unter Zugabe von 2 Massenanteilen Alkylsuccinimid (Alkylrest aus 60-90 C-Atomen bestehend) -bezogen auf den Feststoffgehalt- in n-Hexan eine stabile Dispersion hergestellt. Dazu wird in die das Alkylsuccinimid enthaltende Hexan-Lösung bei Raumtemperatur unter Rühren portionsweise das Siliciumcarbonitridpulver und dann das Yttriumoxid eingetragen. Der Feststoffgehalt der Dispersion beträgt 58 %. Anschließend erfolgt zur vollständigen Vermischung der Pulver eine 4-stündige Mahlung der Dispersion in einer Kugelmühle. Danach wird in einem Vakuumrotationsverdampfer das Lösungsmittel abdestilliert. Das auf diese Weise erhaltene trockene Versatzgemisch wird mittels eines 315 µm - Siebes granuliert und das Granulat bei einem Prozeßdruck von 250 MPa zu kantenstabilen Biegebruchstäben verpreßt, die eine Gründichte von 54 % der theoretischen Dichte aufweisen und die nach Ausheizen des Alkylsuccinimids bei Temperaturen oberhalb 1.700°C zu dichten Probekörpern gesintert werden können.

## Patentansprüche

1. Verfahren zur Herstellung von sinterfähigen Grünkörpern unter Verwendung von nanoskaligen nichtoxidischen Pulvern, dadurch gekennzeichnet, daß nanoskalige nichtoxidische Pulver mit einer oberen Korngröße bis 500 nm oder nanoskalige nichtoxidische Pulver mit einer oberen Korngröße bis 500 nm und nichtoxidische Pulver mit einer mittleren Korngröße größer 500 nm in einem organischen Lösungsmittel mit mindestens einem höhermolekularen Dispergierhilfsmittel, bestehend aus einer oder mehreren polaren Gruppen und einer oder mehreren langkettigen aliphatischen Resten, dispergiert werden, und diese Dispersion anschließend zu einem sinterfähigen Grünkörper verarbeitet wird, wobei als höhermolekulares Dispergierhilfsmittel ein Imid einer gesättigten oder ungesättigten Dicarbonsäure mit einem oder mehreren Alkylresten oder Alkenylresten einer Kettenlänge von mehr als 35 C-Atomen eingesetzt wird.

2. Verfahren nach Anspruch 1, dadurch gekennzeichnet, daß nanoskalige nichtoxidische Pulver mit einer oberen Korngröße bis 100 nm eingesetzt werden.

3. Verfahren nach Anspruch 1, dadurch gekennzeichnet, daß als höhermolekulares Dispergierhilfsmittel ein alkyl- oder alkenylsubstituiertes Imid der Bernsteinsäure eingesetzt wird.

4. Verfahren nach Anspruch 1, dadurch gekennzeichnet, daß die höhermolekularen Dispergierhilfsmittel gleichzeitig als Formgebungshilfsmittel angewendet werden.

5. Verfahren nach Anspruch 1, dadurch gekennzeichnet, daß die höhermolekularen Dispergierhilfsmittel in einer Menge von 0,5 bis 20 Ma-%, bezogen auf den Feststoffgehalt, eingesetzt werden.

6. Verfahren nach Anspruch 5, dadurch gekennzeichnet, daß die höhermolekularen Dispergierhilfsmittel in einer Menge von 1 bis 8 Ma-%, bezogen auf den Feststoffgehalt, eingesetzt werden.

7. Verfahren nach Anspruch 1, dadurch gekennzeichnet, daß die nanoskaligen nichtoxidischen Pulver mit einer oberen Korngröße bis 500 nm in einem Masseanteil von 2 bis 95 %, bezogen auf die Gesamtpulvermasse, eingesetzt werden.

8. Verfahren nach Anspruch 6, dadurch gekennzeichnet, daß die nanoskaligen nichtoxidischen Pulver mit einer oberen Korngröße bis 500 nm in einem Masseanteil von 20 bis 50 %, bezogen auf die Gesamtpulvermasse, eingesetzt werden.

## Claims

1. Process for the production of sinterable green compacts using nanoscalar, non-oxide powders, characterised in that nanoscalar, non-oxide powders having an upper grain size of up to 500 nm or nanoscalar, non-oxide powders having an upper grain limit of up to 500 nm and non-oxide powders having an average grain size of greater than 500 nm are dispersed in an organic solvent with at least one relatively high molecular weight dispersion auxiliary consisting of one or more polar groups and one or more long-chain aliphatic residues, and this dispersion is then processed to yield a sinterable green compact, wherein the relatively high molecular weight dispersion auxiliary used is an imide of a saturated or unsaturated dicarboxylic acid with one or more alkyl residues or alkenyl residues of a chain length of more than 35 C atoms.

2. Process according to claim 1, characterised in that nanoscalar, non-oxide powders having an upper grain size of up to 100 nm are used.

3. Process according to claim 1, characterised in that the relatively high molecular weight dispersion auxiliary used is an alkyl- or alkenyl-substituted imide of succinic acid.

4. Process according to claim 1, characterised in that the relatively high molecular weight dispersion auxiliaries are simultaneously used as shaping auxiliaries.

5. Process according to claim 1, characterised in that the relatively high molecular weight dispersion auxiliaries are used in a quantity of 0.5 to 20% by mass, relative to the solids content.

6. Process according to claim 5, characterised in that the relatively high molecular weight dispersion auxiliaries are used in a quantity of 1 to 8% by mass, relative to the solids content.

7. Process according to claim 1, characterised in that the nanoscalar, non-oxide powders having an upper grain size of up to 500 nm are used in a proportion by mass of 2 to 95%, relative to the total mass of powder.

8. Process according to claim 6, characterised in that the nanoscalar, non-oxide powders having an upper grain size of up to 500 nm are used in a proportion by mass of 20 to 50%, relative to the total mass of powder.

## Revendications

1. Procédé pour la préparation de corps crus frittables à partir de poudres non-oxydiques à l'échelle nanométrique, caractérisé en ce que l'on disperse les poudres non-oxydiques nanométriques à une dimension de grain maximale de 500 nm ou des poudres non-oxydiques nanométriques à une dimension maximale de 500 nm et des poudres non-oxydiques à une dimension de grain moyenne supérieure à 500 nm dans un solvant organique avec au moins un produit auxiliaire dispersant à haut poids moléculaire consistant en un ou plusieurs groupes polaires et un ou plusieurs radicaux aliphatiques à longue chaîne et on convertit ensuite cette dispersion en un corps cru frittable, dans lequel on utilise en tant que produit auxiliaire dispersant à haut poids moléculaire un imide d'acide dicarboxylique saturé ou insaturé à un ou plusieurs groupes alkyle ou alcényle à une longueur de chaîne supérieure à 35 atomes de carbone.

2. Procédé selon la revendication 1, caractérisé en ce que l'on met en oeuvre des poudres non-oxydiques nanométriques à une dimension de grain maximale de 100 nm.

3. Procédé selon la revendication 1, caractérisé en ce que l'on utilise en tant que produit auxiliaire dispersant à haut poids moléculaire un imide de l'acide succinique à substituants alkyle ou alcényle.

4. Procédé selon la revendication 1, caractérisé en ce que le produit auxiliaire dispersant à haut poids moléculaire sert simultanément de produit auxiliaire de façonnage.

5. Procédé selon la revendication 1, caractérisé en ce que l'on utilise le produit auxiliaire dispersant à haut poids moléculaire en quantité de 0,5 à 20 % en poids sur les matières solides.

6. Procédé selon la revendication 5, caractérisé en ce que l'on utilise le produit auxiliaire dispersant à haut poids moléculaire en quantité de 1 à 8 % en poids sur les matières solides.

7. Procédé selon la revendication 1, caractérisé en ce que les poudres non-oxydiques nanométriques à une dimension de grain maximale de 500 nm sont présentes en proportion de 2 à 95 % du poids total des poudres.

8. Procédé selon la revendication 6, caractérisé en ce que les poudres non-oxydiques nanométriques à une dimension de grain maximale de 500 nm représentent de 20 à 50 % du poids total des poudres.
